**Europäisches Patentamt**

(19) **European Patent Office**

**Office européen des brevets**

(11) Veröffentlichungsnummer: **0 049 803**
B1

(12) ## EUROPÄISCHE PATENTSCHRIFT

(45) Veröffentlichungstag der Patentschrift:
21.11.84

(51) Int. Cl.³: **C 10 G 45/54, B 01 J 29/06, B 01 J 29/22, C 10 L 1/06**

(21) Anmeldenummer: **81107716.3**

(22) Anmeldetag: **29.09.81**

(54) **Hydrierte Kohlenwasserstoffgemische, Verfahren zu ihrer Herstellung, ihre Verwendung und Treibstoffe, enthaltend diese hydrierten Kohlenwasserstoffgemische.**

(30) Priorität: **09.10.80 DE 3038117**

(43) Veröffentlichungstag der Anmeldung:
**21.04.82 Patentblatt 82/16**

(45) Bekanntmachung des Hinweises auf die Patenterteilung:
**21.11.84 Patentblatt 84/47**

(84) Benannte Vertragsstaaten:
**BE DE FR GB**

(56) Entgegenhaltungen:
**CH - A - 454 104
DE - A - 2 411 986
FR - A - 1 510 253
FR - A - 2 145 683
US - A - 3 668 269
US - A - 3 917 739
US - A - 4 162 212
US - A - 4 209 384**

(73) Patentinhaber: **EC ERDÖLCHEMIE GMBH,
Postfach 75 20 02, D-5000 Köln 71 (DE)**

(72) Erfinder: **Schöneberger, Helmut, Dr., Im Bergfeld 24,
D-6729 Wörth/Rhein (DE)**
Erfinder: **Schleppinghoff, Bernhard, Dr., Adolf Kolping
Strasse 5, D-4047 Dormagen 1 (DE)**

(74) Vertreter: **Mann, Volker, Dr. et al, c/o Bayer
Aktiengesellschaft Zentralbereich Patente Marken und
Lizenzen, D-5090 Leverkusen-Bayerwerk (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft hydrierte Kohlenwasserstoffgemische, ein Verfahren zu ihrer Herstellung durch Hydrierung von Kohlenwasserstoffgemischen, die einen Gehalt an Olefinen und/ oder Acetylenen haben, ihre Verwendung als Beimischung zum Treibstoff für Vergasermotoren sowie solche Treibstoffe, die erfindungsgemäße hydrierte Kohlenwasserstoffgemische enthalten.

Beim thermischen Cracken von Mineralölfraktionen, wie Naphtha, Gasöl und Vakuumölen, entstehen die bekannten Petrochemikalien, wie Ethylen, Propylen, Butene, Butadien und Aromaten, und daneben flüssige Kohlenwasserstoff-Fraktionen, die wirtschaftlich nicht sinnvoll in ihre Einzelkomponenten aufgearbeitet werden können. Diese Fraktionen werden normalerweise als sogenanntes Pyrolysebenzin, gegebenenfalls nach einer Stabilisierung durch Entfernung der Diolefine und Acetylene, dem Fahrbenzin zugemischt. Dieses geschieht vor allem mit der vor dem Benzol siedenden Fraktion mit einem Siedebereich von 25 bis 75°C, die bei der Aromatengewinnung anfällt und nach der Stabilisierung, beispielsweise durch Hydrierung oder gegebenenfalls durch Extraktion oder Extraktivdestillation, der Diolefine und Acetylene noch reich an Olefinen ist. Die motorischen Eigenschaften dieser Fraktion sind jedoch unbefriedigend, vor allem die Motoroktanzahl (MOZ), die bei ca. 76 liegt. Dadurch ist nur eine begrenzte Zumischung zum Fahrbenzin möglich. Hohe Anforderungen an die Kraftstoffqualität infolge neuer energiesparender Motoren sowie aus Gründen einer Bleifreiheit oder Bleibegrenzung im Fahrbenzin machen es notwendig, die vorhandenen Kraftstoffquellen durch geeignete Maßnahmen in ihrem motorischen Verhalten zu verbessern. Die genannte Fraktion enthält neben Olefinen und Paraffinen noch Naphthene und in untergeordnetem Maße Aromaten. Die Olefine ebenso wie die Paraffine dieser Fraktion bestehen aus $C_4-C_8$-Kohlenwasserstoffen, wobei die $C_5-C_6$-Kohlenwasserstoffe und besonders der $C_5$-Anteil überwiegen.

Aus US-A-3 691 101 ist es bekannt, zur Hydrierung von beispielsweise Okten-1 oder zum Hydrocracken von beispielsweise n-Heptan Katalysatoren einzusetzen, die aus kristallinen Alumino-Silikat-Zeolithen bestehen, die mit Übergangsmetallen durch Austausch oder Imprägnierung belegt sind und dann durch Behandlung mit organometallischen Verbindungen, wie Bortriethyl, Zinkdiethyl oder Aluminiumtriethyl vervollständigt werden. Unter den Übergangsmetallen werden Nickel, Vanadium und Molybdän in den Ausführungsbeispielen besonders gezeigt, wobei aber nach der allgemeinen Beschreibung anstelle der genannten Metalle auch Platin oder Palladium eingesetzt werden können.

Weiterhin ist es bekannt, die Motoroktanzahl eines $C_5-C_6$-Gemisches auf über 78 zu erhöhen, indem man einen Teil des $C_6$-Anteils mit einem Zeolith vom ZSM-5-Typ in Kontakt bringt, den $C_5$-Anteil und den restlichen $C_6$-Anteil mit einem Palladium/HY-Typ-Zeolith/$Al_2O_3$-Kontakt behandelt und anschließend beide Teile dieses Gemischs wieder vereinigt (DE-A-2 934 460). Dieses Verfahren beinhaltet keine Hydrierung.

Schließlich ist die Herstellung von hochoktanhaltigem Benzin durch getrennte Behandlung des $C_3$- und des $C_4$-Schnittes aus der katalytischen Crackung von Kohlenwasserstoffen bekannt, wobei das Propylen der $C_3$-Fraktion in Gegenwart eines Katalysators, der neben einer aluminiumorganischen Verbindung ein Metall der VIII. Nebengruppe des Periodensystems (Mendelejeff), vorzugsweise Nickel, enthält, oligomerisiert wird, getrennt hiervon der $C_4$-Schnitt teilweise an einem $SiO_2$-$Al_2O_3$-Katalysator oligomerisiert wird und die nicht-oligomerisierten $C_4$-Anteile durch Umsetzung von Isobutan und $C_4$-Butenen in Gegenwart von Fluorwasserstoff alkyliert werden und die drei derart behandelten Anteile anschließend vermischt werden (DE-A-2 938 697). Auch dieses Verfahren schließt keine Hydrierung ein.

Aus US-A-3 668 269 ist es bekannt, gesättigte Kohlenwasserstoffe mit 3—7 C-Atomen in Gegenwart von Wasserstoff und bei erhöhter Temperatur und erhöhtem Druck an einem Katalysator zu disproportionieren, der 0,01—5% eines Platinmetalls enthält. Der Träger dieses Katalysators enthält als Hauptbestandteile $SiO_2$ und $Al_2O_3$ in einem molaren Verhältnis von 2 : 1 bis 12 : 1. Dieser Träger hat einen Porendurchmesser von 8 bis 15 Å, eine spezifische Oberfläche von 50 bis über 500 $m^2$/g und zu 1—85 Gew.-% die Struktur eines Molekularsiebes. Ein Gehalt an Olefinen im Einsatzgemisch für diese Disproportionierung ist unerwünscht und wird bevorzugt völlig vermieden.

Ähnliche Katalysatorsysteme wie in US-A-3 668 269, bei denen Molekularsiebe wie Mordenit als Träger eingesetzt werden, sind auch aus FR-A-1 510 253 bekannt, wo sie zur Isomerisierung und Aromatisierung von gesättigten Einsatzprodukten (Reformieren) eingesetzt werden.

Es wurde nunmehr ein Verfahren zur Herstellung eines hydrierten Kohlenwasserstoff-Gemisches durch Behandlung eines Kohlenwasserstoff-Gemisches mit einem Gehalt an ungesättigten Verbindungen an Katalysatoren mit einem Gehalt an Metallen der VIII. Nebengruppe des Periodensystems (Mendelejeff) mit Wasserstoff bei erhöhter Temperatur und erhöhtem Druck gefunden, das dadurch gekennzeichnet ist, daß als Kohlenwasserstoff-Gemisch eine Pyrolyse-Benzinfraktion mit einem Siedepunktbereich von 25 bis 75°C, die an geradkettigen oder verzweigten paraffinischen, einfach oder mehrfach olefinisch ungesättigten oder acetylenisch ungesättigten Kohlenwasserstoffen mit 4—8 C-Atomen 0,1—8 Gew.-% $C_4$-Kohlenwasserstoffe, 5—40 Gew.-% Pentane, 10—30 Gew.-% n-Pentene, 10—40 Gew.-% Isoamylene, 2—20 Gew.-% Cyclopentan, 3—30 Gew.-% Cyclopenten und 2—40 Gew.-% $C_6$-Kohlenwasserstoffe sowie gegebenenfalls geringe Anteile an Kohlenwasserstoffen mit 3 oder mehr ungesättigten C=C-Bindungen, gegebenenfalls geringe Anteile an Kohlenwasserstoffen

2

mit weniger als 4 oder mehr als 8 C-Atomen und gegebenenfalls geringe Anteile an Aromaten enthält, in Gegenwart von Wasserstoff an einem Katalysator behandelt wird, dessen Träger als Hauptbestandteile $SiO_2$ und $Al_2O_3$ mit einem Verhältnis von $SiO_2$ zu $Al_2O_3$ von 1 : 4 bis 9 : 1, einen Porendurchmesser von 3 bis 12 Å, eine spezifische Oberfläche von 200 bis 700 m$^2$/g, bevorzugt 400 bis 600 m$^2$/g, und zu 25 bis 100 Gew.-% die Struktur eines Molekularsiebes besitzt und einen Gehalt an Metall der VIII. Nebengruppe von 0,1 bis 3 Gew.-%, bezogen auf das Gesamtgewicht des Katalysators, aufweist, so daß der Anteil der olefinisch und acetylenisch ungesättigten Komponenten im eingesetzten Pyrolysebenzin auf 0,1 bis 8 Gew.-% seines ursprünglichen Wertes abgesenkt wird.

Die erfindungsgemäß einsetzbare Pyrolyse-Benzinfraktion wird beispielsweise beim thermischen Cracken von Naphtha oder Gasöl erhalten. Eine solche Pyrolyse-Benzinfraktion wird im allgemeinen vor der Abtrennung von Aromaten aus einem Pyrolysegemisch erhalten. Solche erfindungsgemäß einsetzbaren Fraktionen enthalten geradkettige oder verzweigte paraffinische, einfach oder mehrfach olefinisch ungesättigte oder acetylenisch ungesättigte Kohlenwasserstoffe mit 4 bis 8 C-Atomen, wie die verschiedenen isomeren Butane, Butene oder Butine, Pentane, Pentene oder Pentine bis zu den Oktanen, Oktenen und Oktinen, ferner Butadien, Pentadien, bis hin zu Oktadienen. Selbstverständlich können auch geringe Anteile von Kohlenwasserstoffen mit drei oder mehr ungesättigten C—C-Bindungen enthalten sein.

Weiterhin können solche Pyrolyse-Benzinfraktionen auch geringe Anteile von Kohlenwasserstoffen mit weniger als 4 C-Atomen oder geringe Anteile von Kohlenwasserstoffen mit mehr als 8 C-Atomen sowie geringe Anteile bei der Destillation mitgerissene Aromaten enthalten. Selbstverständlich können ähnliche Kohlenwasserstoffgemische anderer Herkunft ebenso erfindungsgemäß eingesetzt werden.

Erfindungsgemäß kann reiner oder technischer Wasserstoff eingesetzt werden. Technischer Wasserstoff kann beispielsweise Verunreinigungen, wie Methan bis zu 25 Vol.-%, Ethylen bis zu 0,2 Vol.-%, Kohlenmonoxid bis 0,5 Vol.-% und Wasser, bis zum Sättigungsgrad enthalten. Der Wasserstoff wird in äquivalenter oder überschüssiger Menge, bezogen auf die zur vollständigen Hydrierung der Doppel- und/oder Dreifachbindung erforderlichen Menge, eingesetzt. Eine überschüssige Menge Wasserstoff ist hierbei bevorzugt, weil damit eine gleichmäßige Strömungsverteilung, eine gute Durchmischung des Reaktionsgemisches und eine gleichmäßige Benetzung der katalytisch wirkenden Kontaktoberflächen erreicht wird. Beispielsweise sei eine Menge von 0,6 bis 30 Mol, bevorzugt 0,8 bis 10, besonders bevorzugt 1 bis 5 Mol, Wasserstoff pro Mol Kohlenwasserstoff genannt, wobei die Molzahl des Kohlenwasserstoff-Gemisches ein Mittelwert aus den Molzahlen der verschiedenen Kohlenwasserstoffe entsprechend ihrer Menge im Gemisch bedeutet. Hierbei wird gleichzeitig der Erfahrung Rechnung getragen, daß ein solches Kohlenwasserstoffgemisch im allgemeinen nicht mehr als 0,6 Mol Gesamtungesättigtheit pro Mol Kohlenwasserstoffgemisch in Form von olefinischen oder acetylenischen Mehrfachbindungen hat.

Das erfindungsgemäße Verfahren wird bei einer Temperatur von 150 bis 480° C, bevorzugt 280 bis 360° C, und einem Druck von 5 bis 80 bar, bevorzugt 15 bis 30 bar, durchgeführt.

Weiterhin wird eine Kontaktbelastung durch WHSV-Werte (WHSV = weight-hourly-space-velocity) von 0,5 bis 8, bevorzugt 1 bis 4 g Reaktionsgemisch pro g Kontaktfüllung pro Stunde eingestellt.

Erfindungsgemäß wird ein Katalysator eingesetzt, dessen Träger als Hauptbestandteile $SiO_2$ und $Al_2O_3$ enthält, die in einem Gewichtsverhältnis von $SiO_2$ zu $Al_2O_3$ wie 1 : 4 bis 9 : 1 stehen. Besonders geeignete Katalysatorträger für das erfindungsgemäße Verfahren sind in der Natur vorkommende oder synthetisch hergestellte Molekularsiebe aus $SiO_2$ und $Al_2O_3$, z. B. natürliche oder synthetische Zeolithe oder Mordenite, unter denen besonders die Mordenite geeignet sind. Der Anteil an Molekularsieb bewegt sich zwischen 25 und 100 Gew.-%. Die Molekularsiebe selbst haben ein Molverhältnis $SiO_2$ : $Al_2O_3$ von 2 bis 20. Neben dem chemisch im Molekularsieb gebundenen $Al_2O_3$ kann weiterhin freies $Al_2O_3$ in einer Menge von 0 bis 75 Gew.-% im Träger vorhanden sein. Das obengenannte Gewichtsverhältnis $SiO_2$ : $Al_2O_3$ von 1 : 4 bis 9 : 1 schließt das $Al_2O_3$ des Molekularsiebes und das freie $Al_2O_3$ ein. Die erfindungsgemäß einsetzbaren Katalysatorträger haben eine genau definierte Porenstruktur. So liegen die Porendurchmesser bei 3 bis 12 Å und die spezifische Oberfläche bei 200 bis 700 m$^2$/g, bevorzugt 400 bis 600 m$^2$/g. Der erfindungsgemäß einsetzbare Katalysator enthält ferner ein Metall der VIII. Nebengruppe des Periodensystems (Mendelejeff), beispielsweise Eisen, Kobalt, Nikkel, Ruthenium, Rhodium, Palladium, Osmium, Iridium, Platin, bevorzugt eines der genannten Edelmetalle, besonders bevorzugt Platin oder Palladium, ganz besonders bevorzugt Platin. Der Anteil des Metalls der VIII. Nebengruppe des Periodensystems beträgt 0,1 bis 3 Gew.-%, bevorzugt 0,3 bis 1,0 Gew.-%, bezogen auf das Gesamtgewicht des Katalysators. Außerdem kann der Katalysator in Summe bis zu 1 Gew.-% Fremdanionen, wie Chlorid und/oder Sulfat, und in Summe bis zu 1 Gew.-% Fremdkationen, wie Na, K, Ca, Mg, Fe und Ti, enthalten.

Der erfindungsgemäß einsetzbare Katalysator hat eine bestimmte Acidität, die durch den H-Mordenitgehalt des Trägers gegeben ist und im Gewichtsverhältnis H-Mordenit zu $Al_2O_3$ von 1 : 0 bis 1 : 4 eingestellt wird. Die Acidität wird nach Austausch mit Alkaliionen in der durch Elution erhaltenen wäßrigen Lösung acidimetrisch bestimmt.

Vor dem Einsatz für das erfindungsgemäße Verfahren wird der Kontakt bei 300 bis 500° C und $H_2$-Drücken von 5 bis 80 bar mit Wasserstoff über einen Zeitraum von 2 bis 80 Stunden, bevorzugt 20 bis 50 Stunden, aktiviert.

Solche Katalysatoren zeigen eine hohe Standzeit, beispielsweise über 400 Stunden, und sind weiterhin durch eine gute Regenerierbarkeit ausgezeichnet. Zur Regenerierung wird beispielsweise wie folgt verfahren:

Nach Inertisierung der Kontaktzone mit Stickstoff wird unter langsamem Aufheizen bis 500°C der Stickstoff schrittweise durch Luft ersetzt. Temperaturspitzen > 500° C sind hierbei weniger vorteilhaft. Die Regenerierung wird beispielsweise bei 500° C und 1 bar Luft über 48 Stunden fortgesetzt.

Das erfindungsgemäße Verfahren kann kontinuierlich oder diskontinuierlich durchgeführt werden. Die bevorzugte kontinuierliche Durchführung kann in der Gasphase, in der Flüssigphase oder in der Rieselphase durchgeführt werden, wobei der Katalysator fest angeordnet sein kann, im Fließbett betrieben wird oder in Röhrenreaktoren angeordnet sein kann. Die Pyrolysefraktion und der Wasserstoff können im Gleichstrom oder im Gegenstrom am Katalysator vorbeigeführt werden, wobei die Gleichstromfahrweise die bevorzugte ist. Der Katalysator kann von oben nach unten oder von unten nach oben angeströmt werden. Erfindungsgemäß wird der Anteil der olefinisch und acetylenisch ungesättigten Komponenten im eingesetzten Pyrolysebenzin auf 0,1 bis 8, bevorzugt 0,2 bis 5, besonders bevorzugt 0,5 bis 3 Gew.-% seines ursprünglichen Wertes abgesenkt. Etwa vorhandene geringe Anteile an aromatischen Verbindungen werden ebenfalls weitgehend zu den zugehörigen gesättigten Verbindungen aufhydriert, beispielsweise Benzol zu Cyclohexan. Dieses Aufhydrieren der aromatischen Verbindungen erfolgt beispielsweise bis zu einem Wert von der Nachweisbarkeitsgrenze der Aromaten bis zu einem Gehalt von etwa 10 Gew.-% des ursprünglichen Gehaltes an Aromaten, bevorzugt bis zu einem Wert von 0,1 bis 5 Gew.-% des ursprünglichen Gehaltes an Aromaten.

Das erfindungsgemäße Verfahren läßt an dem eingesetzten Pyrolysebenzin gleichzeitig mehrere Reaktionsabläufe, beispielsweise Hydroisomerisierung, Hydrierung, Isomerisierung, Disproportionierung und Ringöffnung, ablaufen, wobei im Gegensatz zu Verfahren des Standes der Technik nur ein Katalysator erforderlich ist, der überraschenderweise in der geschilderten Art multifunktionell wirkt. Hierbei wird an dem erfindungsgemäß behandelten Kohlenwasserstoffgemisch eine Erhöhung der Motoroktanzahl (MOZ) von mehr als 5 Punkten bewirkt. Diese MOZ-Erhöhung liegt somit erheblich über dem Wert, der durch Hydrierung allein erhalten wird. Der Effekt der hohen Oktanzahlgewinnung ist um so überraschender, als die rechnerische Bestimmung der MOZ aufgrund des Produktspektrums keine so deutliche MOZ-Erhöhung erwarten läßt. Die MOZ-Berechnung erfolgt mit Hilfe von Korrelationsgleichungen, die aus Regressionsanalysen für die einzelnen Komponenten entwickelt wurden (Lit.: W. C. Healey jr., C. W. Maassen und R. T. Peterson, API Midyear Meeting Dir. of Ref., 27. 5. 1955). Die nachfolgende Gegenüberstellung von berechneter und ermittelter MOZ veranschaulicht den überraschenden Effekt der Hydroisomerisierung (HI):

| | MOZ-Vergleich unverbleit | | |
| | MOZ vor HI gemessen | MOZ nach HI gerechnet | MOZ nach HI gemessen |
| --- | --- | --- | --- |
| C$_5$-Fraktion | 76,2 | 77,3 | 82,4 |

Gleichzeitig wird auch die Sensitivity erniedrigt, worunter die Differenz zwischen Research-Oktanzahl (ROZ) und MOZ verstanden wird. Diese Erniedrigung der Sensitivity beträgt etwa 12 Punkte.

Die Erfindung betrifft somit auch hydrierte und multifunktionell behandelte Kohlenwasserstoffgemische, enthaltend in der Hauptsache C$_4$—C$_8$-Kohlenwasserstoffe, hergestellt nach dem oben beschriebenen Verfahren, mit einer um mehr als 5 Punkte erhöhten Motoroktanzahl und einer um etwa 12 Punkte erniedrigten Sensitivity gegenüber dem Pyrolysebenzin.

Die Erfindung betrifft weiterhin die Verwendung dieses erfindungsgemäßen Kohlenwasserstoffgemisches als Beimischung zum Fahrbenzin für Vergasermotoren.

Die Erfindung betrifft schließlich auch Treibstoffe für Vergasermotoren, enthaltend einen Gehalt von 5 bis 80, bevorzugt 10 bis 50, besonders bevorzugt 20 bis 40 Vol.-% an erfindungsgemäßem Kohlenwasserstoffgemisch.

Beispiel 1

Die Hydroisomerisierung (HI) des KW-Stromes (Zusammensetzung s. Tabelle) wurde am Festbettkontakt in einem elektrisch beheizten Rohrreaktor bei einer Reaktionstemperatur von 300°C, einem Druck von 26 bar, einer Kohlenwasserstoff-WHSV von 2 (200 g KW über 100 g Katalysator in einer Stunde) und einem H$_2$-Durchsatz von 120 l/h betrieben. Als Katalysator wurde ein auf H-Mordenit/ Al$_2$O$_3$-Träger dotierter Pt-Kontakt folgender Zusammensetzung verwendet:

4

**0 049 803**

Kontaktmenge

| 50,5 Gew.-% H-Mordenit | 44,0 Gew.-% SiO |
| +49,0 Gew.-% $Al_2O_3$ | 54,91 Gew.-% $Al_2O_3$ |
| | 0,5 Gew.-% Pt |
| | 0,265 Gew.-% Chlorid |
| | 0,055 Gew.-% Sulfat |
| | 0,15 Gew.-% Na |
| | 0,021 Gew.-% K |
| | 0,099 Gew.-% Fe |

| Spezifische Oberfläche | 485 $m^2/g$ |
| Porendurchmesser ca. | 9 Å |

Die Ergebnisse sind in der Tabelle dargestellt.

Beispiel 2

Es wurde wie in Beispiel 1 verfahren. Als Katalysator wurde ein Kontakt folgender Zusammensetzung genommen:

| 33,3 Gew.-% H-Mordenit | 29 Gew.-% SiO |
| 66,2 Gew.-% $Al_2O_3$ | 70,1 Gew.-% $Al_2O_3$ |
| | 0,5 Gew.-% Pt |
| | 0,165 Gew.-% Chlorid |
| | 0,035 Gew.-% Sulfat |
| | 0,11 Gew.-% Na |
| | 0,014 Gew.-% K |
| | 0,076 Gew.-% Fe |

| Spezifische Oberfläche | 590 $m^2/g$ |
| Porendurchmesser ca. | 9 Å |

Die Ergebnisse sind in der Tabelle dargestellt.

5

| Komponente | Einsatzprodukt Gew.-% | HI-Produkt Beispiele | |
| --- | --- | --- | --- |
| | | 1 | 2 |
| n-Butan | 0,2 | 1,4 | 1,1 |
| Isobutan | 0,1 | 2,2 | 1,8 |
| n-Buten | 0,8 | <0,1 | <0,1 |
| Isobuten | 0,1 | <0,1 | <0,1 |
| n-Pentan | 16,7 | 25,3 | 26,7 |
| Isopentan | 6,0 | 31,5 | 30,8 |
| n-Pentene | 14,9 | <0,1 | <0,1 |
| Isopentene | 21,2 | <0,1 | <0,1 |
| Cyclopentan | 10,7 | 18,8 | 19,0 |
| Cyclopenten | 11,0 | <0,1 | <0,1 |
| Cyclohexan | — | <0,8 | <0,9 |
| Methylcyclopentan | 1,3 | 2,2 | 2,0 |
| Methylcyclopenten | 0,8 | <0,1 | <0,1 |
| n-Hexan | 5,6 | 5,0 | 5,1 |
| Isohexan | 4,4 | 12,8 | 12,6 |
| n-Hexene | 1,3 | <0,1 | <0,1 |
| Isohexene | 4,1 | <0,1 | <0,1 |
| Benzol | 0,6 | <0,1 | <0,1 |
| Gemischdaten | | | |
| Bromzahl | 90,7 | <0,2 | <0,2 |
| MOZ unverbleit | 76,2 | 82,4 | 81,8 |
| MOZ verbleit, 0,14 g TEL/l | 81,9 | 89,1 | 88,4 |
| Sensitivity | 15,6 | 3,3 | 3,9 |

**Patentansprüche**

1. Verfahren zur Herstellung eines hydrierten Kohlenwasserstoffgemisches durch Behandlung eines Kohlenwasserstoffgemisches mit einem Gehalt an ungesättigten Verbindungen an Katalysatoren mit einem Gehalt an Metallen der VIII. Nebengruppe des Periodensystems (Mendelejeff) mit Wasserstoff bei erhöhter Temperatur und erhöhtem Druck, dadurch gekennzeichnet, daß als Kohlenwasserstoffgemisch eine Pyrolyse-Benzinfraktion mit einem Siedepunktbereich von 25 bis 75° C, die an geradkettigen oder verzweigten paraffinischen, einfach oder mehrfach olefinisch ungesättigten oder acetylenisch ungesättigten Kohlenwasserstoffen mit 4 bis 8 C-Atomen 0,1—8 Gew.-% $C_4$-Kohlenwasserstoffe, 5—40 Gew.-% Pentane, 10—30 Gew.-% n-Pentene, 10—40 Gew.-% Isoamylene, 2—20 Gew.-% Cyclopentan, 3—30 Gew.-% Cyclopenten und 2—40 Gew.-% $C_6$-Kohlenwasserstoffe sowie gegebenenfalls geringe Anteile an Kohlenwasserstoffen mit 3 oder mehr ungesättigten C=C-Bindungen,

6

gegebenenfalls geringe Anteile an Kohlenwasserstoffen mit weniger als 4 oder mehr als 8 C-Atomen und gegebenenfalls geringe Anteile an Aromaten enthält, in Gegenwart von Wasserstoff an einem Katalysator behandelt wird, dessen Träger als Hauptbestandteile $SiO_2$ und $Al_2O_3$ mit einem Verhältnis von $SiO_2$ zu $Al_2O_3$ von 1 : 4 bis 9 : 1, einen Porendurchmesser von 3 bis 12 Å, eine spezifische Oberfläche von 200 bis 700 m$^2$/g, bevorzugt 400 bis 600 m$^2$/g, und zu 25 bis 100 Gew.-% die Struktur eines Molekularsiebes besitzt und einen Gehalt an Metall der VIII. Nebengruppe von 0,1 bis 3 Gew.-%, bezogen auf das Gesamtgewicht des Katalysators, aufweist, so daß der Anteil der olefinisch und acetylenisch ungesättigten Komponenten im eingesetzten Pyrolysebenzin auf 0,1 bis 8 Gew.-% seines ursprünglichen Wertes abgesenkt wird.

2. Verfahren nach Anspruch 1, dadurch gekennzeichnet, daß das Molekularsieb des Trägers ein Mordenit ist.

3. Verfahren nach Ansprüchen 1 und 2, dadurch gekennzeichnet, daß ein Katalysator eingesetzt wird, dessen Acidität durch das Gewichtsverhältnis H-Mordenit zu $Al_2O_3$ in den Grenzen von 1 : 0 bis 1 : 4 eingestellt wird.

4. Verfahren nach Ansprüchen 1 bis 3, dadurch gekennzeichnet, daß ein Katalysator mit einem Träger aus 25 bis 100 Gew.-% eines Molekularsiebes und 0 bis 75 Gew.-% freiem $Al_2O_3$ und einem Gehalt von 0,1 bis 3 Gew.-%, bevorzugt 0,3 bis 1,0 Gew.-%, an Metallen der VIII. Nebengruppe, vorzugsweise Platin und gegebenenfalls in Summe bis zu 1 Gew.-% Fremdanionen, wie Chlorid und Sulfat, und in Summe bis zu 1 Gew.-% Fremdkationen, wie Na, K, Ca, Mg, Fe und Ti, bezogen auf das Gesamtgewicht des Katalysators, eingesetzt wird.

5. Hydriertes und multifunktionell behandeltes Kohlenwasserstoffgemisch, enthaltend hauptsächlich $C_4$—$C_8$-Kohlenwasserstoffe, erhalten nach dem Verfahren gemäß Anspruch 1, mit einer um mehr als 5 Punkte erhöhten Motoroktanzahl und einer um etwa 12 Punkte erniedrigten Sensitivity, bezogen auf das Herkunftspyrolysegemisch.

6. Verwendung eines Kohlenwasserstoffgemisches nach Anspruch 5 als Beimischung zum Fahrbenzin für Vergasermotoren.

7. Treibstoff für Vergasermotoren, gekennzeichnet durch einen Gehalt an 5 bis 80 Vol.-% des Kohlenwasserstoffgemisches nach Anspruch 5.

## Claims

1. Process for the preparation of a hydrogenated hydrocarbon mixture by treatment of a hydrocarbon mixture containing unsaturated compounds with hydrogen at elevated temperature and under increased pressure over catalysts containing metals of sub-group VIII of the periodic system (Mendeleev), characterised in that a pyrolysis petroleum fraction which has a boiling point range from 25 to 75°C and contains, of the straight-chain or branched paraffinic, olefinically monounsaturated or polyunsaturated or acetylenically unsaturated hydrocarbons with 4 to 8 C atoms, 0.1—8% by weight of $C_4$-hydrocarbons, 5—40% by weight of pentanes, 10—30% by weight of n-pentenes, 10—40% by weight of isoamylenes, 2—20% by weight of cyclopentane, 3—30% by weight of cyclopentene and 2—40% by weight of $C_6$-hydrocarbons as well as, optionally, low amounts of hydrocarbons with 3 or more unsaturated $C = C$ bonds, optionally low amounts of hydrocarbons with less than 4 or more than 8 C atoms, and, optionally, low amounts of aromatics, is treated, as the hydrocarbon mixture, in the presence of hydrogen over a catalyst, of which the support has, as its main constituents, $SiO_2$ and $Al_2O_3$ in a ratio of $SiO_2$ to $Al_2O_3$ of 1 : 4 to 9 : 1, a pore diameter of 3 to 12 Å, a specific surface area of 200 to 700 m$^2$/g, preferably 400 to 600 m$^2$/g, and the structure of a molecular sieve to an extent of 25 to 100% by weight, and contains 0.1 to 3% by weight, based on the total weight of the catalyst, of a metal of sub-group VIII, such that the content of olefinically and acetylenically unsaturated components in the pyrolysis petroleum used is reduced to 0.1 to 8% by weight of its original value.

2. Process according to Claim 1, characterised in that the molecular sieve of the support is a mordenite.

3. Process according to Claims 1 and 2, characterised in that a catalyst is used of which the acidity is adjusted by a weight ratio of H-mordenite to $Al_2O_3$ within the limits of 1 : 0 to 1 : 4.

4. Process according to Claims 1 to 3, characterised in that a catalyst with a support of 25 to 100% by weight of a molecular sieve and 0 to 75% by weight of free $Al_2O_3$ and a content of 0.1 to 3% by weight, preferably 0.3 to 1.0% by weight, of metals of sub-group VIII, preferably platinum, and, optionally, a total of up to 1% by weight of foreign anions, such as chloride and sulphate and a total of up to 1% by weight of foreign cations, such as Na, K, Ca, Mg, Fe and Ti, based on the total weight of the catalyst, is used.

5. Hydrogenated and multifunctionally treated hydrocarbon mixture which contains mainly $C_4$—$C_8$-hydrocarbons, is obtained by the process according to Claim 1, and has a motor octane number increased by more than 5 points and a sensitivity reduced by about 12 points, relative to the original pyrolysis mixture.

6. Use of a hydrocarbon mixture according to Claim 5 as an admixture to petrol for carburettor engines.

7. Fuel for carburettor engines, characterised in that it contains 5 to 80% by volume of the hydrocarbon mixture according to Claim 5.

**Revendications**

1. Procédé de production d'un mélange d'hydrocarbures hydrogénés par traitement d'un mélange d'hydrocarbures contenant des composés insaturés sur des catalyseurs contenant des métaux du sous-groupe VIII du Système Périodique (Mendelejeff) avec de l'hydrogène à température élevée et à pression élevée, caractérisé en ce qu'on traite comme mélange d'hydrocarbures une fraction d'essence de pyrolyse ayant une plage d'ébullition de 25 à 75° C, qui contient des hydrocarbures paraffiniques, à une ou plusieurs insaturations oléfiniques ou à insaturation acétylénique, à chaîne droite ou ramifiés, de 4 à 8 atomes de carbone, en proportion de 0,1 à 8% en poids d'hydrocarbures en $C_4$, de 5 à 40% en poids de pentanes, de 10 à 30% en poids de n-pentènes, de 10 à 40% en poids d'iso-amylènes, de 2 à 20% en poids de cyclopentane, de 3 à 30% en poids de cyclopentène et de 2 à 40% en poids d'hydrocarbures en $C_6$ ainsi que, le cas échéant, de faibles proportions d'hydrocarbures ayant 3 ou plus de 3 liaisons d'insaturation $C=C$, le cas échéant, de faibles proportions d'hydrocarbures ayant moins de 4 ou plus de 8 atomes de carbone et, éventuellement, de faibles proportions d'hydrocarbures aromatiques, en présence d'hydrogène sur un catalyseur dont le support possède comme composants principaux $SiO_2$ et $Al_2O_3$ avec un rapport de $SiO_2$ à $Al_2O_3$ de 1 : 4 à 9 : 1, un diamètre des pores de 3 à 12 Å, une surface spécifique de 200 à 700 $m^2/g$, de préférence de 400 à 600 $m^2/g$ et, en proportion de 25 à 100% en poids, la structure d'un tamis moléculaire et présente une teneur en métal du sous-groupe VIII de 0,1 à 3% en poids, par rapport au poids total du catalyseur, de manière à abaisser la proportion des composants à insaturation oléfinique et acétylénique dans l'essence de pyrolyse utilisée à 0,1—8% en poids de sa valeur initiale.

2. Procédé suivant la revendication 1, caractérisé en ce que le tamis moléculaire du support est une mordénite.

3. Procédé suivant les revendications 1 et 2, caractérisé en ce qu'on utilise un catalyseur dont l'acidité est ajustée par le rapport en poids de la mordénite H à $Al_2O_3$ dans les limites de 1 : 0 à 1 : 4.

4. Procédé suivant les revendications 1 à 3, caractérisé en ce qu'on utilise un catalyseur dont le support est formé de 25 à 100% en poids d'un tamis moléculaire et de 0 à 75% en poids de $Al_2O_3$ libre et ayant une teneur de 0,1 à 3% en poids, de préférence de 0,3 à 1,0% en poids, en métaux du sous-groupe VIII, de préférence le platine et, le cas échéant, un total atteignant 1% en poids d'anions étrangers tels que chlorure et sulfate et un total atteignant 1% en poids de cations étrangers tels que Na, K, Ca, Mg, Fe et Ti, par rapport au poids total du catalyseur.

5. Mélange d'hydrocarbures hydrogéné et traité de manière multifonctionnelle, contenant principalement des hydrocarbures en $C_4$ à $C_8$, obtenu par le procédé suivant la revendication 1, ayant un indice d'octane moteur élevé de plus de 5 points et une sensibilité abaissée d'environ 12 points par rapport au mélange pyrolysé d'origine.

6. Utilisation d'un mélange d'hydrocarbures suivant la revendication 5, comme essence pour moteurs à carburateur.

7. Carburant pour moteurs à carburateur, caractérisé par une teneur de 5 à 80% en volume en mélange d'hydrocarbures suivant la revendication 5.